# EUROPÄISCHE PATENTSCHRIFT

(11) **EP 1 112 881 B1**
(45) Veröffentlichungstag und Bekanntmachung des Hinweises auf die Patenterteilung: **04.04.2007**
(21) Anmeldenummer: 00128696.2
(22) Anmeldetag: 29.12.2000
(51) Int. Cl.: B60J 7/185

(54) **Verriegelungsvorrichtung für ein Klappverdeck**
Locking device for foldable top
Dispositif de verrouillage pour toit pliant

(30) Priorität: 01.01.2000 DE 10000002
(43) Veröffentlichungstag der Anmeldung: 04.07.2001
(73) Patentinhaber: Webasto Vehicle Systems International GmbH, 82131 Stockdorf (DE)
(72) Erfinder: Schütt, Thomas, 82256 Fürstenfeldbruck (DE); Asendorf, Sven, 82211 Herrsching (DE); Lauterbach, Marco, 95359 Kasendorf (DE)
(74) Vertreter: Konnerth, Dieter Hans

(56) Entgegenhaltungen:
- US-A- 5 269 586
- US-A- 5 284 378
- US-A- 5 839 778

## Beschreibung

Die Erfindung betrifft eine Verriegelungsvorrichtung für ein Klappverdeck eines Fahrzeugs. US 5,839,778 beschreibt eine Verriegelungsvorrichtung zum Verriegeln eines Klappverdecks eines Fahrzeugs an einem Windlauf, die einen bewegbar gelagerten Verriegelungshaken aufweist, der mittels einer Antriebseinrichtung in einem Regeleingriff an einem Riegelgegenstück verriegelbar ist, wobei
der Verriegelungshaken an einer Dachspitze des Klappverdecks bewegbar gelagert ist und am Windlauf als Riegelgegenstück verriegelbar ist, und wobei
die Antriebseinrichtung ein Zwischenglied und insbesondere einen Kipphebel bewegt, der mit dem Verriegelungshaken gekoppelt ist und diesen zum Schließen und Verriegeln des Verdecks in einer Schwenkschiebebewegung relativ zu einem feststehenden Führungsteil, das mit einer Führungsbahn des Verriegelungshakens in Führungseingriff ist, verschiebt und um das Führungsteil verschwenkt.

In der DE 297 03 774 U1 ist eine Verschlußvorrichtung für ein Cabriolet-Verdeck beschrieben, die einen an einer Dachspitze eines Cabriolets um eine Fahrzeug-Querachse schwenkbar gelagerten Riegelhaken aufweist, der mittels eines über einen Handgriff betätigten Viergelenks in seine Riegelstellung schwenkbar ist, in der er die Dachspitze des Cabriolet-Verdecks an einem Windlauf geschlossen und verriegelt hält.

Aus der WO 92/15466 (EP 0 536 354) ist eine Verriegelungsvorrichtung für ein Klappverdeck bekannt geworden, die einen an einem Lagerhebel schwenkbar gelagerten Riegelhaken aufweist. Der Lagerhebel ist an einer Lagerplatte einer Dachspitze des Klappverdecks schwenkbar gelagert und über ein Antriebsteil motorisch bewegbar. Die Lagerplatte weist eine Führungsfläche auf, gegen die der Riegelhaken mittels einer Feder gespannt ist. Durch das bewegte Antriebsteil wird der Riegelhaken mittels der Lagerplatte und Führungsfläche aus seiner Außereingriffstellung in die Eingriffs- und Riegelstellung an einem Widerlager an einem Windlauf gebracht.

Die EP 0 492 006 A1 offenbart eine Vorrichtung zum Niederholen und Festhalten einer Dachspitze eines Fahrzeugverdecks. Ein Niederhol- und Verriegelungshaken ist an einem Rahmen an der Unterseite eines Windlaufs zum Eingriff an einem Widerlager an der Dachspitze bewegbar gelagert. Der Niederhohlhaken weist einen länglichen Führungsschlitz auf, durch den sich ein rahmenfester Führungszapfen erstreckt. Am rückwärtigen Ende des Niederhohlhakens ist ein Schwenkzapfen angebracht, der in einem Aufnahmeschlitz des Rahmens geführt und durch eine Antriebseinrichtung bewegbar ist. Der angetriebene und in dem Aufnahmeschlitz bewegte Schwenkzapfen verschwenkt den Niederhohlhaken um den rahmenfesten Führungszapfen, während gleichzeitig der Niederhohlhaken relativ zu dem Führungszapfen verschoben wird.

Aufgabe der Erfindung ist es, eine Verriegelungsvorrichtung zu schaffen, die bei einfachem Aufbau ein funktionssicheres Annähern der Dachspitze auf dem letzten Bewegungsweg bis zum Windlauf und das Verriegeln daran gewährleistet.

Diese Aufgabe wird durch die Merkmale des Anspruchs 1 gelöst.

Vorteilhafte Ausgestaltungen der Erfindung sind in den Unteransprüchen angegeben.

Eine bevorzugte Ausgestaltung sieht vor, daß der Verriegelungshaken mit der Antriebseinrichtung über einen Verriegelungsmechanismus gekoppelt ist, der den an der Dachspitze oder dem Windlauf schwenkbar gelagerten Kipphebel enthält, welcher über ein von der Führungsbahn beabstandetes Koppelelement, z. B. ein Bolzen, mit dem Verriegelungshaken verbunden ist, und daß der Verriegelungsmechanismus den Verriegelungshaken im letzten Bewegungsabschnitt vor seiner Verriegelungsstellung am Windlauf bei erhöhter Antriebskraft verlangsamt bewegt.

Zweckmäßigerweise ist das Koppelelement bzw. der Bolzen von dem Kipphebel auf einer Kurvenbahn, insbesondere auf einem Kreisbahnabschnitt, geführt. Die Kurvenbahn bestimmt den jeweiligen Abstand von dem Bolzen zu dem feststehenden Führungsteil in der Führungsbahn oder Kulissenführung des Verriegelungshakens. Eine Kurvenbahn in Form z. B. einer Kreisbahn ist dann gebildet, wenn der Kipphebel um eine feste Schwenkachse verschwenkbar gelagert ist. Wenn die Schwenkachse benachbart neben dem feststehenden Führungsteil angeordnet ist, resultiert bei entsprechender Bewegungsrichtung der erwünschte zunehmende Abstand zwischen dem Bolzen und dem Führungsteil, der das Verschieben des Verriegelungshakens in der erwünschten Weise bewirkt.

Vorzugsweise enthält die Antriebseinrichtung einen Antriebszapfen, der mit dem Kipphebel gekoppelt ist und diesen in zwei entgegengesetzte Richtungen zum Verriegeln bzw. zum Entriegeln antreibt, wobei der Antriebszapfen auf einer im wesentlichen linearen und zu der Schwenkachse bzw. zu einem Lagerbolzen des Kipphebels beabstandeten Bewegungsbahn an der Schwenkachse oder dem Lagerbolzen vorbeigeführt und in einer Führungsbahn des Kipphebels zum Ausgleich des sich ändernden Abstandes zur Schwenkachse im Antriebseingriff verschiebbar aufgenommen ist. Die Antriebseinrichtung kann den Antriebszapfen jedoch auch auf einer nichtlinearen Bewegungsbahn antreiben, die gemäß einem erforderlichen Bewegungsverhalten ausgelegt ist.

Zum sicheren Schließen des Verdecks, insbesondere bei der Bewegung in die Dichtung, ist es zweckmäßig, wenn der Antriebszapfen von der Antriebseinrichtung gegen die Verriegelungsstellung des Verriegelungshakens hin verlangsamt bewegt ist. Die verlangsamte Bewegung kann beispielsweise durch eine variable Geschwindigkeit eines Antriebsmotors erzielt werden. Eine bevorzugte Ausgestaltung sieht jedoch vor, daß die Antriebseinrichtung einen an der Dachspitze oder am Windlauf in Querrichtung angeordneten Antriebslenker, der an seinem äußeren Ende den in den Verriegelungsmechanismus eingreifenden Antriebszapfen aufweist und an dem gegenüberliegenden inneren Ende schwenkbar gelagert ist, so daß der Antriebszapfen auf einer in etwa geradlinigen Bewegungsbahn beim Verschwenken des Antriebslenkers geführt ist, und ein an der Dachspitze bzw. am Windlauf in Querrichtung fest angebrachtes und den Antriebslenker unter einem spitzen Winkel schneidendes Führungselement aufweist, an dem ein von einer Antriebskrafteinheit antreibbarer Kulissenstein verschiebbar gelagert ist, der in eine Längsführung des Antriebslenkers im Schnittpunkt gleitend eingreift und durch seine Längsverlagerung am Führungselement den Antriebslenker mit dem Antriebszapfen verschwenkt. Durch diesen einfachen, mechanischen Mechanismus wird ohne eine spezielle Drehzahlregelung eines beispielhaft verwendeten Elektroantriebsmotors das Bewegungsverhalten des Antriebszapfens eingestellt. Somit bewegt der mit in etwa konstanter Geschwindigkeit angetriebene Kulissenstein den Zapfen in Abhängigkeit von seiner Bewegungsrichtung beschleunigt oder verzögert.

Wenn die Führungsbahn oder Kulissenführung in dem Verriegelungshaken zumindest einen nichtlinearen Bahnabschnitt aufweist, so kann in Überlagerung zu der Bewegung des Zwischengliedes oder des Kipphebels die Bewegung des Verriegelungshakens zusätzlich eingestellt werden.

Bevorzugt ist der Verriegelungshaken in dem Verriegelungsmechanismus in symmetrischer Anordnung zwischen zwei Halteplatten und/oder zwischen zwei Kipphebeln verschiebbar gelagert. So ist der Verriegelungshaken beispielsweise zwischen zwei an der Dachspitze befestigten Halteplatten aufgenommen und von zwei Kipphebeln bewegt, die jeweils an einer Halteplatte schwenkbar gelagert sind. Diese Gestaltung bietet eine sichere Lagerung und Abstützung des Verriegelungshakens und eine gleichmäßige Krafteinleitung und Kraftabstützung und damit eine hohe Funktionssicherheit.

Vorzugsweise ist der zumindest eine Verriegelungshaken in einer im wesentlichen senkrechten Fahrzeugebene bewegbar angeordnet. Durch diese Bewegung des oder der Verriegelungshaken kann die Dachspitze auf einer Bewegungsbahn von oben gegen den Windlauf geführt werden.

Zweckmäßigerweise ist die Antriebskrafteinrichtung der Antriebseinrichtung ein Elektromotor, der über ein Ritzel ein mit dem Kulissenstein verbundenes Steigungskabel antreibt. Jedoch können auch hydraulische Antriebe verwendet werden. Alternativ dazu kann die Antriebskrafteinrichtung ein Handgriff und insbesondere Drehgriff sein, der zum Bewegen des Kulissensteins über ein Steigungskabel mit diesem verbunden ist. Durch eine zentrale Anordnung der Antriebskrafteinrichtung können zwei voneinander beabstandete Verriegelungsmechanismen ebenso wie auch nur ein Verriegelungsmechanismus betätigt werden.

In einer alternativen, bevorzugten Ausführung ist die Antriebseinrichtung jeweils als ein schwenkbarer Handgriff für jeden Verriegelungsmechanismus gebildet, der mit dem Zapfen in Antriebsverbindung gekoppelt ist. Der Handgriff kann in Schließstellung durch eine Sicherung gegen ungewolltes Öffnen verriegelt sein.

Nachfolgend werden Ausführungsbeispiele der Verriegelungsvorrichtung unter Bezugnahme auf die Zeichnungen näher erläutert. Es zeigt:
- Fig. 1: in seitlicher Draufsicht in schematischer Darstellung ein erstes Ausführungsbeispiel einer Verriegelungsvorrichtung mit einem geöffneten Verriegelungshaken und seinem Verriegelungsmechanismus an einer Dachspitze eines Klappverdecks eines Cabriolets;
- Fig. 2: in seitlicher Draufsicht den Verriegelungshaken in einer Zwischenstellung;
- Fig. 3: in seitlicher Draufsicht den Verriegelungshaken in seiner Riegelstellung am Windlauf bei geschlossenem Verdeck;
- Fig. 4: in einer perspektivischen Ansicht den Verriegelungshaken mit seinem Verriegelungsmechanismus und einer Antriebseinrichtung;
- Fig. 5: in einer Oberansicht die Antriebseinrichtung;
- Fig. 6: in seitlicher Draufsicht in schematischer Darstellung ein zweites Ausführungsbeispiel der Verriegelungsvorrichtung mit dem Verriegelungsmechanismus bei geöffnetem Verriegelungshaken;
- Fig. 7: in seitlicher Draufsicht die Verriegelungsvorrichtung mit dem Verriegelungsmechanismus bei verriegeltem Verriegelungshaken;
- Fig. 8: in einer perspektivischen Ansicht den Verriegelungsmechanismus;
- Fig. 9: in einer perspektivischen Ansicht den Verriegelungshaken mit seinem Verriegelungsmechanismus und einer Antriebseinrichtung;
- Fig. 10: in einer Oberansicht die Antriebseinrichtung;
- Fig. 11: in seitlicher Draufsicht in schematischer Darstellung ein drittes Ausführungsbeispiel eines Verriegelungsmechanismus mit geöffnetem Verriegelungshaken mit einem Handbetätigungsgriff; und
- Fig. 12: in seitlicher Draufsicht den Verriegelungshaken in seiner verriegelten Schließstellung.

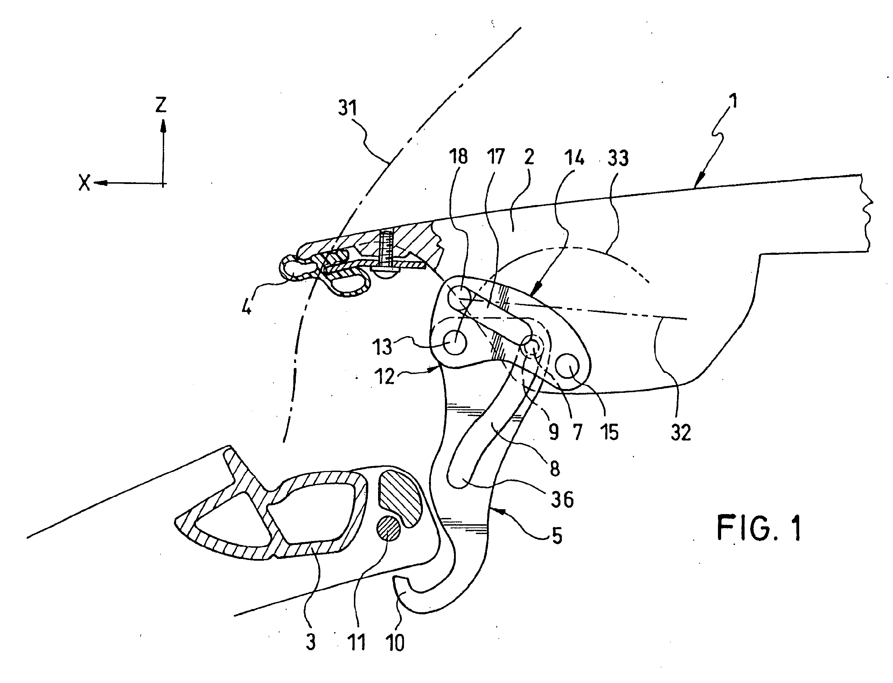

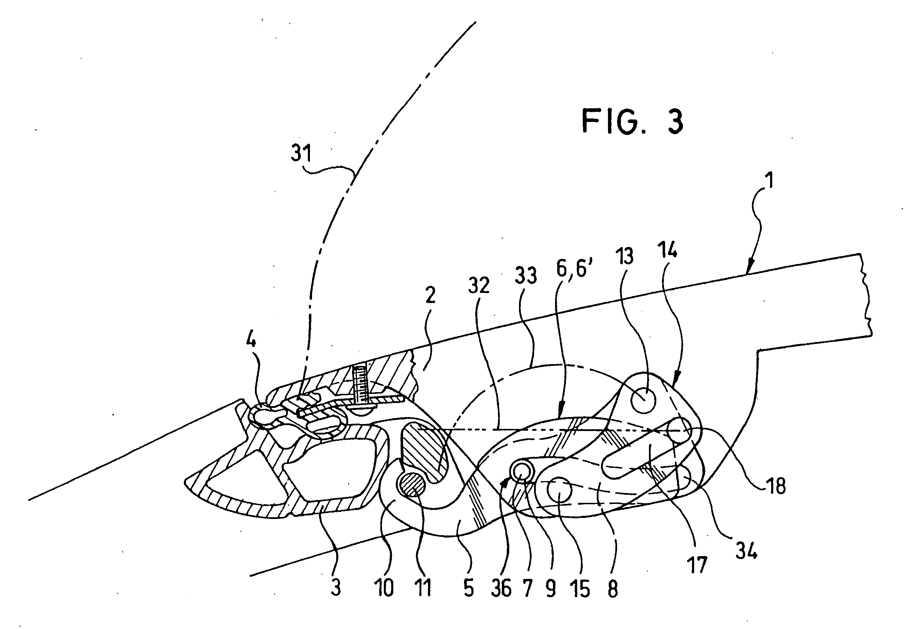

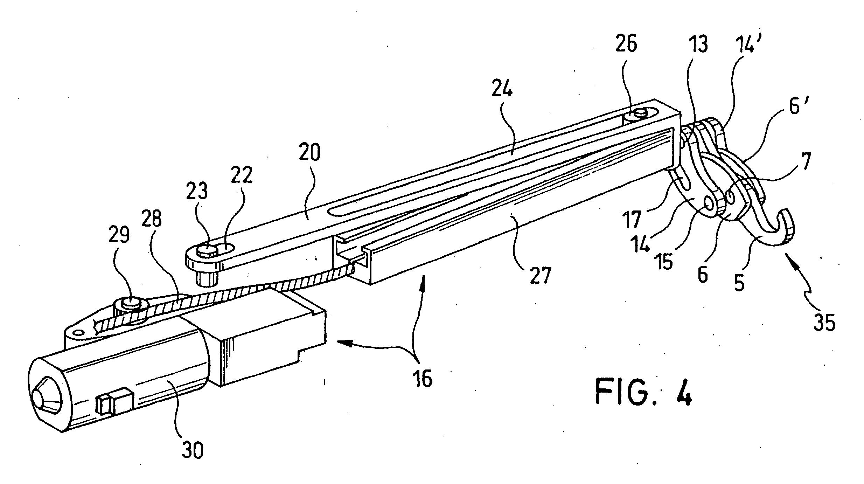

Ein Verdeck 1 eines Cabriolets, insbesondere ein Falt- oder Klappverdeck, enthält eine Dachspitze 2 (siehe Fig. 1), die z. B. einen die beiden vorderen seitlichen Längslenker eines Verdeckgestänges verbindenden Frontspriegel aufweist. Bei geschlossenem Verdeck 1 (siehe Fig. 3) ist die Dachspitze 2 an einen Querholm oder Windlauf 3 am Oberrand einer Frontscheibe abgesenkt, wobei eine Dichtung 4 der Dachspitze 2 am Windlauf 3 anliegt. Im rechten und im linken Seitenbereich der Dachspitze 2 ist jeweils ein einen Verriegelungshaken 5 aufweisender Verriegelungsmechanismus 35 angeordnet (siehe Fig. 4). Jeder Verriegelungsmechanismus 35 wird über eine motorisch betätigte Antriebseinrichtung 16 angetrieben, die in der Dachspitze 2 zwischen den beiden Verriegelungsmechanismen 35 angeordnet ist. Da der rechte und der linke Verriegelungsmechanismus 35 gleichartig aufgebaut sind, wird die Verriegelungsvorrichtung lediglich anhand des dargestellten linken Verriegelungsmechanismus 35 beschrieben.

Der Verriegelungshaken 5 ist zwischen zwei voneinander beabstandeten, parallelen Halteplatten 6, 6' angeordnet (siehe Fig. 4), die an der Dachspitze 2 befestigt und über einen Bolzen 7 miteinander verbunden sind. Der Bolzen 7 erstreckt sich durch eine Führungsbahn oder Kulisse 8 des Verriegelungshakens 5, die als längliche Ausnehmung in dem Verriegelungshaken 5 gebildet ist. Eine auf dem Bolzen 7 gelagerte Rolle 9 ist in der Kulisse 8 spielfrei oder nahezu spielfrei aufgenommen, so daß der Verriegelungshaken 5 über die Länge der Kulisse 8 relativ zu der Rolle 9 bzw. dem Bolzen 7 verschiebbar und relativ zum Bolzen 7 verschwenkbar ist. Der Verriegelungshaken 5 weist ein vorderes gebogenes Hakenende 10 zum Umgreifen eines Riegelzapfens 11 des Windlaufs 3 auf. Ein rückwärtiges Ende 12 des Verriegelungshakens 5 ist von einem Bolzen 13 durchsetzt, der zwei plattenartige Kipphebel 14, 14' miteinander fest verbindet, die beidseits neben den jeweiligen Außenseiten der zwei Halteplatten 6, 6' angeordnet und an einem jeweiligen Lagerbolzen 15, der in der zugeordneten Halteplatte 6, 6' befestigt ist, schwenkbar gelagert sind (siehe auch Fig. 4).

Der innere Kipphebel 14, der der Antriebseinrichtung 16 benachbart ist, enthält eine Kulisse 17, in die ein Zapfen 18 der Antriebseinrichtung 16 eingreift. Der Zapfen 18 steht an einer außenseitigen Stirnseite 19 eines Antriebslenkers 20 der Antriebseinrichtung 16 hervor, der an der Dachspitze 2 in Querausrichtung angebracht ist und an seinem dem Verriegelungshaken 5 abgewandten Ende 21 ein kurzes Langloch 22 enthält, in das ein dachfester Führungsbolzen 23 eingreift. Der Antriebslenker 20 enthält eine Kulisse 24, die von einem Langloch gebildet ist, das sich vom gegenüberliegenden Ende 25 des Antriebslenkers 20 in Richtung zum kurzen Langloch 22 erstreckt. In die Kulisse 24 greift ein Zapfen eines Kulissensteins 26 ein, der an einem schienenartigen, nach oben offenen Führungsprofil 27 verschiebbar gelagert und über eine Blechlasche mit einem Steigungskabel 28 verbunden ist, das durch ein Führungsrohr geführt ist und mit einem Antriebsritzel 29 eines Elektromotors 30 zum Antreiben des Kulissensteins 26 verbunden ist.

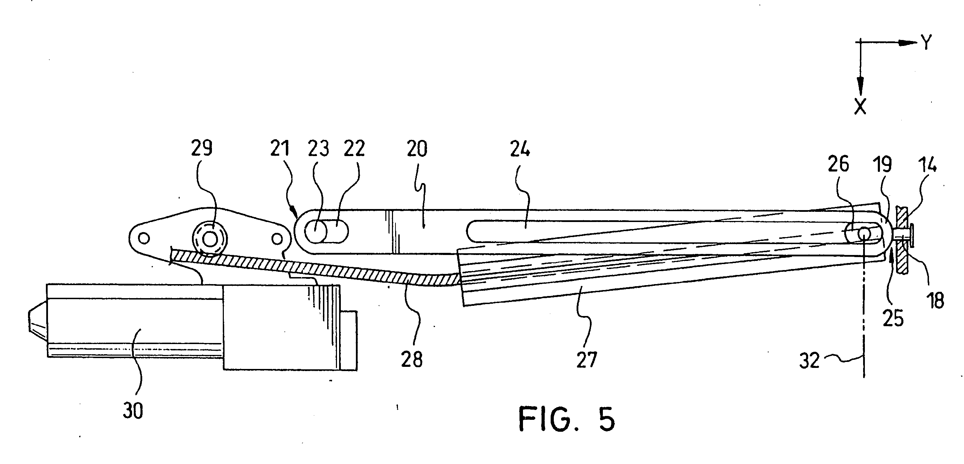

Das Führungsprofil 27 ist an der Dachspitze 2 unter einem geringen Winkel zu dem Antriebslenker 20 in dessen Betriebsstellung gemäß Fig. 5 angeordnet, die der Schließstellung des Verriegelungshakens 5 bei geschlossenem Verdeck 1 entspricht. Wenn der Kulissenstein 26 in dem Führungsprofil 27 aus der in Fig. 5 dargestellten Position an dem zum Verriegelungshaken 5 benachbarten Ende 25 der Kulisse 24 in Richtung zum gegenüberliegenden Ende 21 vom Elektromotor 30 mit konstanter Bewegungsgeschwindigkeit verschoben wird, wird der Antriebslenker 20 aufgrund der beschriebenen Winkelstellung um den Führungsbolzen 23 verschwenkt, so daß sich der Zapfen 18 mit zunehmender Geschwindigkeit in Fahrzeuglängs- oder x-Richtung nach vorne bewegt. Der Zapfen 18 bewegt sich dabei auf einer geraden Bewegungsbahn 32 (siehe die Fig. 1, 2, 3 und 5). Da der Zapfen 18 axial an dem Kipphebel 14 gesichert ist, wird der Antriebslenker 20 beim Verschwenken axial mitgeführt. Diese Ausgleichsbewegung wird durch die Lagerung des Führungsbolzens 23 in dem kurzen Langloch 22 ermöglicht.

Zum Schließen und Verriegeln des Verdecks 1 wird dieses zunächst durch einen Verdeckantrieb in eine Position gemäß Fig. 1 gebracht, in der die Dachspitze z. B. etwa 65 mm (in vertikaler oder z-Richtung) oberhalb des Windlaufes 3 und etwa 20 mm (in x-Richtung) von der endgültigen Schließposition am Windlauf 3 entfernt ist. Die Dachspitze 2 bewegt sich entlang einer in den Fig. 1 bis 3 dargestellten Bewegungsbahn 31. In der in Fig. 1 gezeigten Stellung des Verriegelungsmechanismus 35 ist der Zapfen 18 von der Antriebseinrichtung 16 in eine vordere Endposition auf seiner Bewegungsbahn 32 positioniert worden. Der Zapfen 18 hält den Kipphebel 14 in der dargestellten, vom Lagerbolzen 15 nach vorne weisenden Schwenkstellung, in welcher der Bolzen 13 auf seiner Kreisbewegungsbahn 33 um den Lagerbolzen 15 in seiner vorderen Endposition angeordnet ist. Die Rolle 9 bzw. der Bolzen 7 befindet sich am Hinterende 34 der Kulisse 8, so daß der geöffnete Verriegelungshaken 5 in die dargestellte, annähernd vertikale und nach vorne zum Windlauf 3 hin offene Stellung verschwenkt ist.

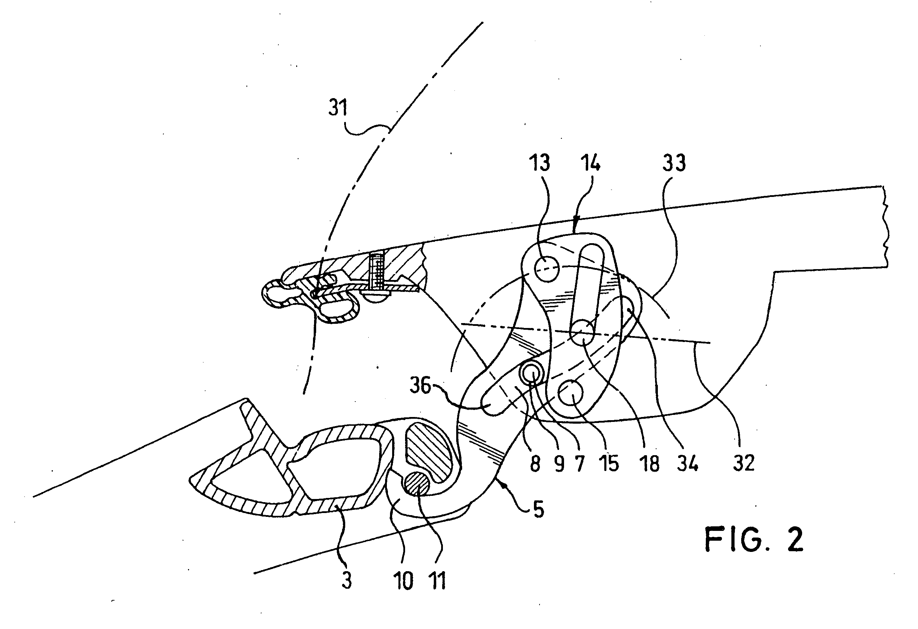

Wenn anschließend der Zapfen 18 durch den Antriebslenker 20 auf seiner geraden Bewegungsbahn 32 rückwärts bewegt wird (siehe Fig. 2), gleitet er in der Kulisse 17 des Kipphebels 14 und verschwenkt dabei den Kipphebel 14 um den Lagerbolzen 15. Der Bolzen 13 bewegt sich auf seiner Kreisbahn 33 und schwenkt dabei den Verriegelungshaken 5 um den dachfesten Bolzen 7. Da sich der Bolzen 13 während seiner Bewegung auf der Kreisbahn 33 vom dachfesten Bolzen 7 entfernt, verschiebt sich gleichzeitig der Verriegelungshaken 5 gegenüber dem Bolzen 7, wobei der Bolzen 7 bzw. die Rolle 9 in der Kulisse 8 in Richtung zum anderen Kulissenende 36 gleitet, so daß der Verriegelungshaken 5 in einer Schwenkschiebebewegung geführt ist, die aus dem sich vergrößernden Abstand zwischen der Rolle 9 und dem Bolzen 13 resultiert. Das Bewegungsverhalten des Verriegelungshakens 5 ist dabei von dem Verlauf der Kulisse 8 im Verriegelungshaken 5 und ihres jeweiligen Abstandes zum Bolzen 13 bestimmt. Gemäß Fig. 2 hat der Verriegelungshaken 5 den Riegelzapfen 11 am Windlauf 3 umgriffen und hat durch seine Aufwärtsbewegung relativ zur Dachspitze 2 diese entlang der Bahnkurve 31 abwärts gegen den Windlauf 3 gezogen.

Wenn der Zapfen 18 durch die Antriebseinrichtung 16 auf seiner geraden Bewegungsbahn 32 in seine hintere Endposition (siehe Fig. 3) weiter bewegt wird, bringt er den Kipphebel 14 durch seinen Eingriff in der Kulisse 17 in dessen hintere Schwenkstellung. Über den Bolzen 13 wird der Verriegelungshaken 5 weiter nach hinten gezogen und relativ zu der Rolle 9 verschoben, bis die Rolle 9 am vorderen Kulissenende 36 anliegt. Gleichzeitig wird der Verriegelungshaken 5 um den Bolzen 7 verschwenkt, so daß das Hakenende 10 die Dachspitze 2 in x-Richtung nach vorne zieht und in z-Richtung abwärts gegen den Windlauf 3 bis in die Schließstellung drückt, in der der Verriegelungshaken 5 das Verdeck bzw. die Dachspitze 2 fest an dem Windlauf 3 hält.

Wenn der Zapfen 18 aus der in Fig. 3 dargestellten Position in entgegengesetzter Richtung angetrieben wird, wird in einem gegenläufigen Bewegungsablauf die Verriegelung des Verriegelungshakens 5 aufgehoben und die Dachspitze 2 wird freigegeben, so daß das Verdeck 1 geöffnet werden kann.

Bei dem dargestellten und beschriebenen Bewegungsablauf treibt der Elektromotor 30 über das Steigungskabel 28 den Kulissenstein 26 mit konstanter Geschwindigkeit zwischen dessen beiden Endlagen an. Durch die Antriebseinrichtung 16 und den Verriegelungsmechanismus 35 wird diese gleichmäßige Antriebsbewegung des Kulissensteins 26 in eine verzögerte Geschwindigkeit des Zapfens 18 entlang seiner linearen Bewegungsbahn 32 von der geöffneten Stellung gemäß Fig. 1 in die verriegelte Stellung gemäß Fig. 3 bzw. in eine beschleunigte Bewegung in entgegengesetzter Richtung umgesetzt. Diese Variation der Geschwindigkeit des Zapfens 18 entlang seiner Bewegungsbahn 32 wird dadurch überlagert, daß sich der Zapfen 18 auf seiner geraden Bewegungsbahn 32 an dem Lagerbolzen 15 mit Abstand vorbeibewegt, wobei sich der Zapfen 18 in der Kulisse 17 des Kipphebels 14 von einer bezüglich dem Lagerbolzen 15 äußeren, entfernten Endposition zu einer inneren, benachbarten Endposition und wieder zurück zu der äußeren Endposition bewegt, und daß der Zapfen 18 durch den variierenden Abstand zum Lagerbolzen 15 eine variierende Verschwenkgeschwindigkeit des Kipphebels 14 erzeugt. Dabei ist in einer mittleren Schwenkstellung (siehe Fig. 2) die Schwenkgeschwindigkeit des Kipphebels 14 und somit des Bolzens 13 größer wie in den beiden endseitigen Positionen des Zapfens 18. Diese unterschiedlichen Schwenkgeschwindigkeiten werden über den sich ändernden Abstand zwischen dem Bolzen 13 und der Rolle 9 bzw. dem Bolzen 7, die die beiden Lagerstellen des Verriegelungshakens 5 bilden, und deren gegenseitige Positionsveränderung in die dargestellte Schwenkschiebebewegung des Verriegelungshakens 5 umgesetzt. Somit bewegt sich der Verriegelungshaken 5 auf seinem letzten Bewegungsabschnitt beim Schließen und Verriegeln des Verdecks 1 (von Fig. 2 nach Fig. 3) aufgrund des beschriebenen Bewegungsverhaltens des Zapfens 18 und des Kipphebels 14 mit deutlich reduzierter Geschwindigkeit. Des weiteren ist die Schließkraft des Verriegelungshakens 5 in seinem letzten Bewegungsabschnitt, in dem die Dichtung 4 an der Dachspitze 2 gegen den Windlauf 3 gedrückt wird, durch den größeren Hebelarm der Schließkrafteinleitung aufgrund des vergrößerten Abstands zwischen dem Bolzen 13 und der Rolle 9 verstärkt.

Durch die Auslegung der Kulisse 8 mit einem oder mehreren unterschiedlich gekrümmten Abschnitten kann, wie aus den Figuren ersichtlich ist, der Bewegungsablauf für ein gewünschtes Bewegungsverhalten des Verriegelungshakens 5 eingestellt werden.

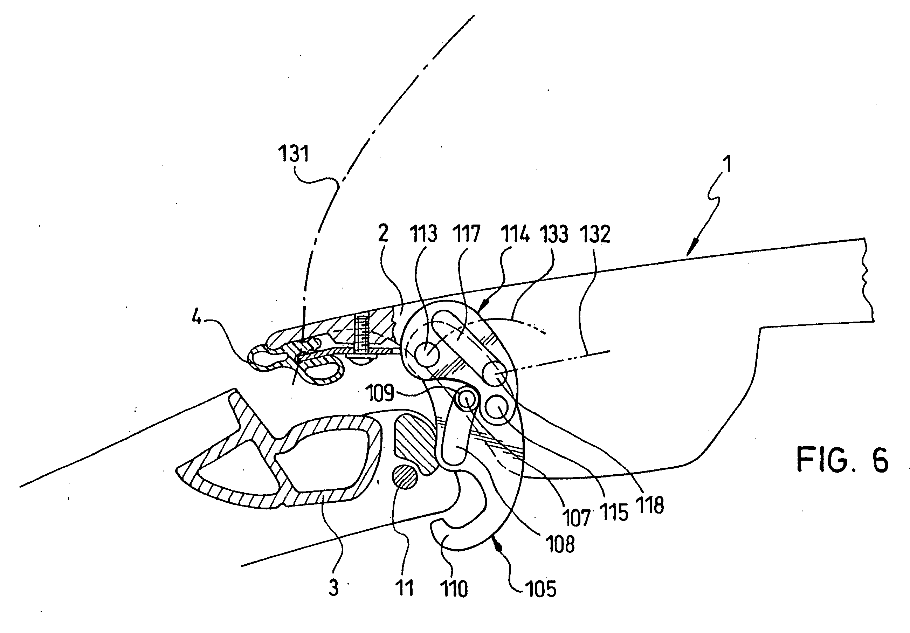

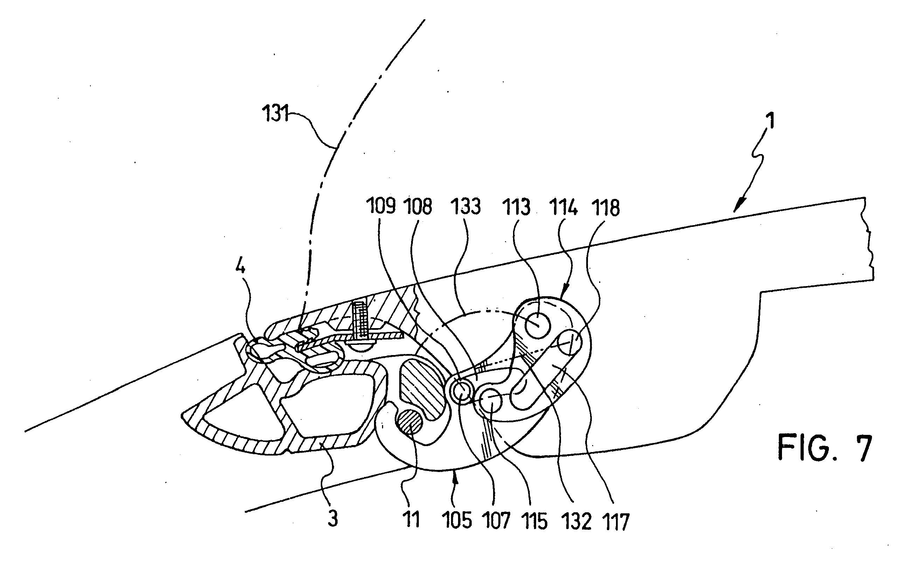

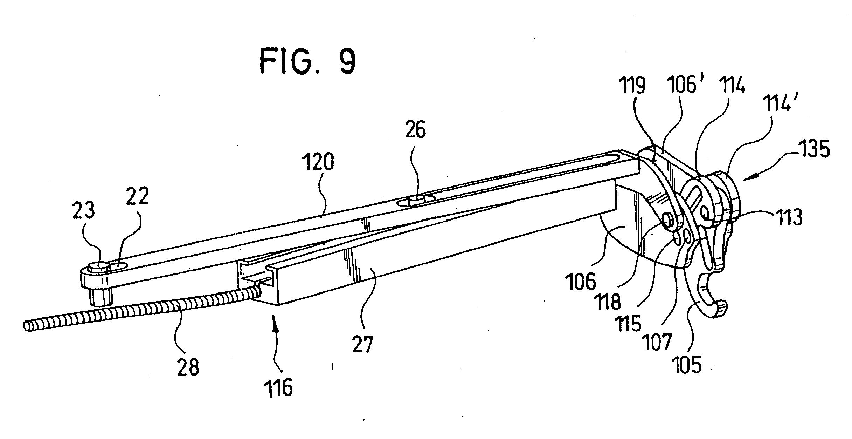

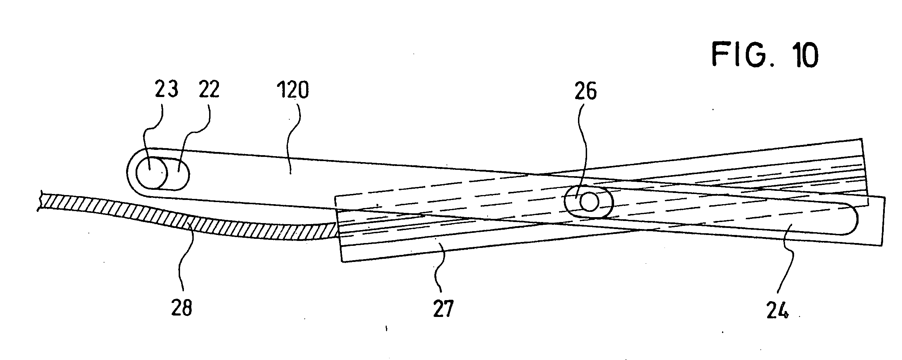

Ein zweites Ausführungsbeispiel der Verriegelungsvorrichtung ist in den Fig. 6 bis 10 dargestellt. Diese Verriegelungsvorrichtung weist einen dem zuerst beschriebenen Ausführungsbeispiel ähnlichen Aufbau auf. Daher sind dem ersten Ausführungsbeispiel identische oder ähnliche Teile mit den Bezugszeichen des ersten Ausführungsbeispiels und im weiteren Sinne vergleichbare Teile mit um 100 erhöhten Bezugszeichen bezeichnet.

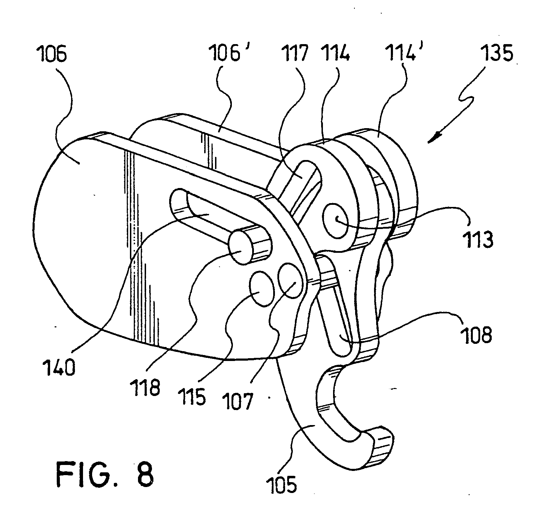

Der Verriegelungshaken 105 ist zwischen zwei voneinander beabstandeten, parallelen Kipphebeln 114, 114' angeordnet (siehe Fig. 8). Ein Bolzen 113 verbindet die beiden Kipphebel 114, 114' fest miteinander und erstreckt sich durch eine Bohrung im Verriegelungshaken 105. Beidseits neben den jeweiligen Außenseiten der Kipphebel 114, 114' ist jeweils eine an der Dachspitze 2 befestigte Halteplatte 106 bzw. 106' angeordnet, an denen jeweils einer der Kipphebel 114 bzw. 114' über einen jeweiligen Lagerbolzen 115 schwenkbar gelagert ist. Die beiden Halteplatten 106, 106' sind zusätzlich über einen Bolzen 107 fest miteinander verbunden. Der Bolzen 107 erstreckt sich durch eine Führungsbahn oder Kulisse 108 des Verriegelungshakens 105, die als längliche Ausnehmung in dem Verriegelungshaken 105 gebildet ist. Auf dem Bolzen 107 kann eine Rolle 109 gelagert und in der Kulisse 108 derart aufgenommen sein, daß der Verriegelungshaken 105 über die Länge der Kulisse 108 relativ zu der Rolle 109 bzw. dem Bolzen 107 verschiebbar und relativ zum Bolzen 107 verschwenkbar ist. Der Verriegelungshaken 105 weist ein vorderes gebogenes Hakenende 110 zum Umgreifen des Riegelzapfens 11 des Windlaufs 3 auf.

Der innere Kipphebel 114, der zur Antriebseinrichtung 116 benachbart ist, enthält eine Kulisse 117, in die der Zapfen 118 der gemäß dem ersten Ausführungsbeispiel gebildeten Antriebseinrichtung 116 eingreift. Der Zapfen 118 steht an der außenseitigen Stirnseite 119 des Antriebslenkers 120 der Antriebseinrichtung 116 hervor. Alternativ zu einem motorischen Antrieb kann die Antriebseinrichtung 116 eine manuelle Betätigungseinrichtung wie z. B. einen zentralen Handdrehgriff aufweisen, durch den über das Steigungskabel 28 der Kulissenstein 26, der in dem nach oben offenen Führungsprofil 27 verschiebbar gelagert ist, zwischen seinen beiden Endstellungen bewegbar ist.

In der Offenstellung der Verriegelungsvorrichtung (siehe Fig. 6) ist der Zapfen 118 in der Kulisse 117 in der zum Lagerbolzen 115 benachbarten Endposition angeordnet. Wenn sich der Zapfen 118 auf seiner geraden Bewegungsbahn 132 nach hinten bewegt, nimmt die Schwenkgeschwindigkeit des Kipphebels 114 aufgrund der anfänglichen Nähe des Zapfens 118 zu dem Lagerbolzen 115 und dem sich zunehmend vergrößernden Abstand kontinuierlich ab. Dadurch wird die Schwenkgeschwindigkeit des Verriegelungshakens 105 zur Schließstellung hin verlangsamt. Beim Verschwenken des Kipphebels 114 entfernt sich der auf der Kreisbahn 133 geführte Bolzen 113 von dem dachfesten Bolzen 107, der in der Kulisse 108 des Verriegelungshakens 105 aufgenommen ist, und zieht dabei den Verriegelungshaken 105 an der Dachspitze 2 nach hinten, bis der Bolzen 107 in der Kulisse 108 seine vordere Endposition einnimmt. Der zunehmende Abstand vom Bolzen 113 zum Bolzen 107 bewirkt als größerer Hebelarm eine Erhöhung der Verriegelungskraft bei der verlangsamten Schließbewegung.

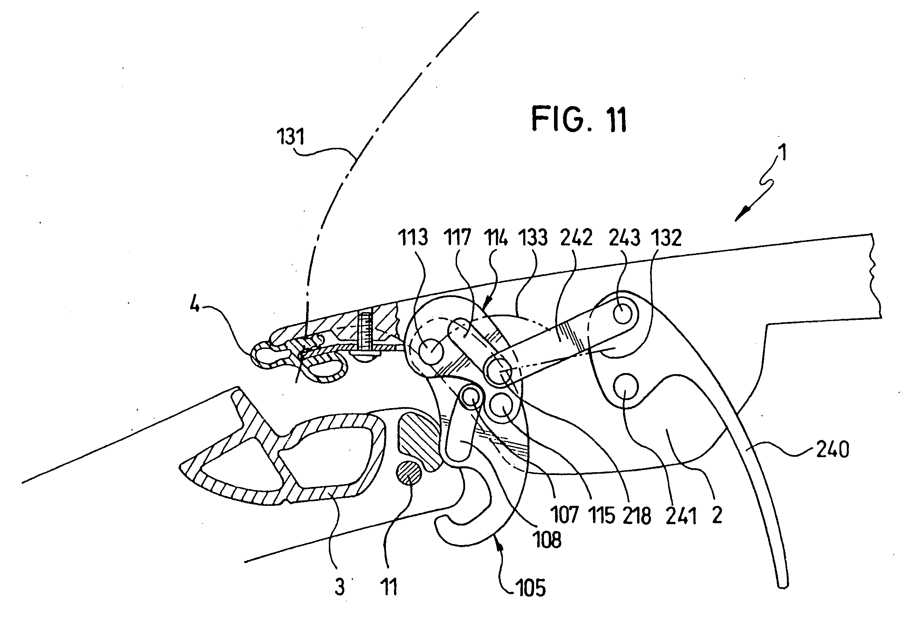

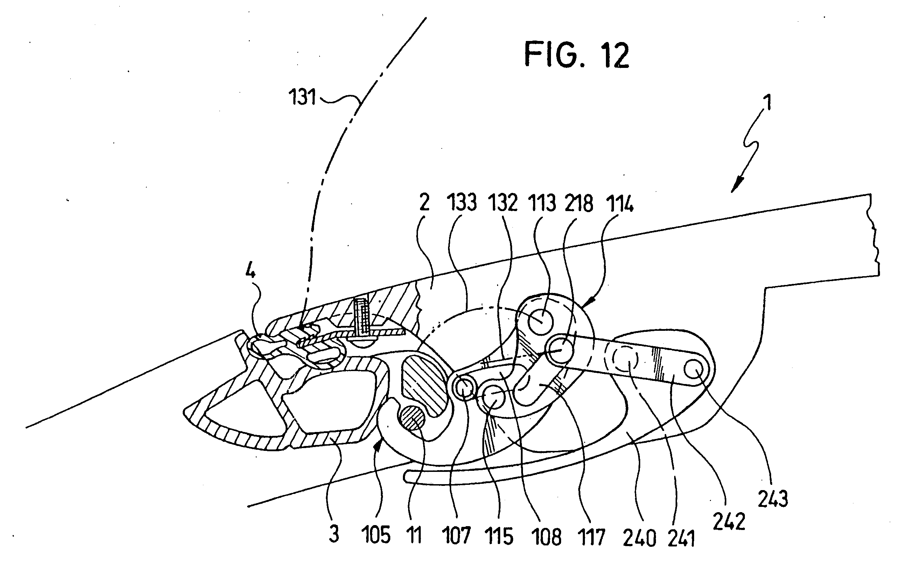

Die als drittes Ausführungsbeispiel in den Fig. 11 und 12 dargestellte Verriegelungsvorrichtung enthält den im zweiten Ausführungsbeispiel beschriebenen Verriegelungsmechanismus 35, jedoch ist statt der Antriebseinrichtung mit einer zentralen motorischen oder manuellen Betätigung jeweils ein Handgriff 240 jedem der beiden Verriegelungsmechanismen 35 zugeordnet. Der Handgriff 240 ist mittels eines Lagerbolzens 241 schwenkbar an der Dachspitze 2 gelagert. Zwei nebeneinander angeordnete Antriebslenker 242 sind einerseits mit einem Bolzen 243 schwenkbar am Handgriff angelenkt und andererseits greifen sie über einen jeweiligen Zapfen 218 in die Kulissen 117, die bei diesem Ausführungsbeispiel in beiden Kipphebeln 114 ausgebildet sind. Durch Verschwenken des Handgriffs 240 aus seiner hinteren Endlage (Fig. 11) in die vordere Endlage (Fig. 12) wird gemäß dem schon beschriebenen Bewegungsverhalten des Verriegelungsmechanismus 35 der Verriegelungshaken 105 in seine Riegelstellung verschwenkt und verschoben. Durch eine nicht dargestellte Sperrklinke kann der Handgriff 240 in der vorderen Endlage verriegelt werden, in der er sich z. B. in einer Totpunktlage befindet.

Wird der Handgriff 240 mit konstanter Schwenkgeschwindigkeit betätigt, so reduziert sich die Geschwindigkeit des Zapfens 218 beim Schließen kontinuierlich. Gleichzeitig reduziert der Verriegelungsmechanismus 35 gemäß der obigen Beschreibung zusätzlich die Verriegelungsgeschwindigkeit des Verriegelungshakens 105. Somit werden die hohen Schließkräfte im Bereich der Verriegelungsstellung durch den großen Betätigungsweg des Handgriffs in kleine Handbetätigungskräfte umgesetzt.

### Bezugszeichenliste

- 1: Verdeck
- 2: Dachspitze
- 3: Windlauf
- 4: Dichtung
- 5: Verriegelungshaken
- 6: Halteplatte
- 6': Halteplatte
- 7: Bolzen
- 8: Kulisse
- 9: Rolle
- 10: Hakenende
- 11: Riegelzapfen
- 12: rückwärtiges Ende
- 13: Bolzen
- 14: Kipphebel
- 14': Kipphebel
- 15: Lagerbolzen
- 16: Antriebseinrichtung
- 17: Kulisse
- 18: Zapfen
- 19: Stirnseite
- 20: Antriebslenker
- 21: abgewandtes Ende
- 22: Langloch
- 23: Führungsbolzen
- 24: Kulisse
- 25: Ende
- 26: Kulissenstein
- 27: Führungsprofil
- 28: Steigungskabel
- 29: Antriebsritzel
- 30: Elektromotor
- 31: Bewegungsbahn
- 32: Bewegungsbahn
- 33: Kreisbewegungsbahn
- 34: hinteres Kulissenende
- 35: Verriegelungsmechanismus
- 36: vorderes Kulissenende
- 105: Verriegelungshaken
- 106: Halteplatte
- 106': Halteplatte
- 107: Bolzen
- 108: Kulisse
- 109: Rolle
- 110: Hakenende
- 111: Riegelzapfens
- 112: rückwärtiges Ende
- 113: Bolzen
- 114: Kipphebel
- 114': Kipphebel
- 115: Lagerbolzen
- 116: Antriebseinrichtung
- 117: Kulisse
- 118: Zapfen
- 119: Stirnseite
- 120: Antriebslenker
- 218: Zapfen
- 240: Handgriff
- 241: Lagerbolzen
- 242: Antriebslenker
- 243: Bolzen

## Patentansprüche

1. Verriegelungsvorrichtung zum Verriegeln eines Klappverdecks eines Fahrzeugs an einem Windlauf, die einen bewegbar gelagerten Verriegelungshaken (5; 105) aufweist, der mittels einer Antriebseinrichtung (16; 240) in einem Riegeleingriff an einem Riegelgegenstück verriegelbar ist und entweder an einer Dachspitze (2) des Klappverdecks (1) oder am Windlauf (3) bewegbar gelagert ist und am Windlauf (3) bzw. an der Dachspitze (2) als Riegelgegenstück verriegelbar ist,
wobei die Antriebseinrichtung (16; 240) ein Zwischenglied und insbesondere einen Kipphebel (14; 114) bewegt, das bzw. der mit dem Verriegelungshaken (5; 105) gekoppelt ist und diesen zum Schließen und Verriegeln des Verdecks (1) in einer Schwenkschiebebewegung relativ zu einem feststehenden Führungsteil (7; 107), das mit einer Führungsbahn (8; 108) des Verriegelungshakens (5; 105) in Führungseingriff ist, verschiebt und um das Führungsteil (7; 107) verschwenkt, und
wobei das Zwischenglied bzw. der Kipphebel (14; 114) eine Führungsbahn (17; 117) aufweist, an der die Antriebseinrichtung (18; 118) beim Verschwenken des Zwischenglieds bzw. Kipphebels (14; 114) mit sich änderndem Abstand zu einer Schwenkachse (15; 115) des Zwischenglieds bzw. Kipphebels (14; 114) angreift.

2. Verriegelungsvorrichtung nach Anspruch 1,
**dadurch gekennzeichnet, daß** der Verriegelungshaken (5; 105) mit der Antriebseinrichtung (16; 240) über einen Verriegelungsmechanismus (35; 135) gekoppelt ist, der den an der Dachspitze (2) oder dem Windlauf (3, 11) schwenkbar gelagerten Kipphebel (14; 114) aufweist, welcher über ein von der Führungsbahn (8; 108) beabstandetes Koppelelement (13) mit dem Verriegelungshaken (5; 105) verbunden ist, und daß der Verriegelungsmechanismus (35; 135) den Verriegelungshaken (5; 105) im letzten Bewegungsabschnitt vor seiner Verriegelungsstellung am Windlauf (3, 11) bei erhöhter Antriebskraft verlangsamt bewegt.

3. Verriegelungsvorrichtung nach Anspruch 2,
**dadurch gekennzeichnet, daß** das Koppelelement (13) von dem Kipphebel (14; 114) auf einer Kurvenbahn (33; 133), insbesondere auf einem Kreisbahnabschnitt, geführt ist.

4. Verriegelungsvorrichtung nach Anspruch 3,
**dadurch gekennzeichnet, daß** ein Antriebszapfen (18; 118; 218) der Antriebseinrichtung (16; 240) mit dem Kipphebel (14; 114) gekoppelt ist und diesen in zwei entgegengesetzte Richtungen zum Verriegeln bzw. zum Entriegeln antreibt, wobei der Antriebszapfen (18; 118) auf einer im wesentlichen linearen und zu einer Schwenkachse (15) des Kipphebels (14; 114) beabstandeten Bewegungsbahn (32; 132) an der Schwenkachse (15) vorbeigeführt und in einer Führungsbahn (17; 117) des Kipphebels (14; 114) zum Ausgleich des sich ändernden Abstandes zur Schwenkachse (15) im Antriebseingriff verschiebbar aufgenommen ist.

5. Verriegelungsvorrichtung nach Anspruch 3 oder 4,
**dadurch gekennzeichnet, daß** der Antriebszapfen (18; 118) von der Antriebseinrichtung (16) gegen die Verriegelungsstellung des Verriegelungshakens (5; 105) hin verlangsamt bewegt ist.

6. Verriegelungsvorrichtung nach einem der Ansprüche 2 bis 5,
**dadurch gekennzeichnet, daß** die Antriebseinrichtung (16) einen an der Dachspitze (2) oder am Windlauf (3) in Querrichtung angeordneten Antriebslenker (20) enthält, der an seinem äußeren Ende einen in den Verriegelungsmechanismus (35; 135) eingreifenden Antriebszapfen (18; 118) aufweist und an dem gegenüberliegenden inneren Ende schwenkbar gelagert ist, so daß der Antriebszapfen (18; 118) auf einer in etwa geradlinigen Bewegungsbahn (32; 132) beim Verschwenken des Antriebslenkers (20) geführt ist, und
ein an der Dachspitze (2) bzw. am Windlauf (3) in Querrichtung fest angebrachtes und den Antriebslenker (20) unter einem spitzen Winkel schneidendes Führungselement (27) aufweist, an dem ein von einer Antriebskrafteinheit (30) antreibbarer Kulissenstein (26) verschiebbar gelagert ist, der in eine Längsführung (24) des Antriebslenkers (20) im Schnittpunkt gleitend eingreift und durch seine Längsverlagerung am Führungselement (27) den Antriebslenker (20) mit dem Antriebszapfen (18; 118) verschwenkt.

7. Verriegelungsvorrichtung nach Anspruch 6,
**dadurch gekennzeichnet, daß** der mit in etwa konstanter Geschwindigkeit angetriebene Kulissenstein (26) den Zapfen (18; 118) je nach Bewegungsrichtung beschleunigt oder verzögert bewegt.

8. Verriegelungsvorrichtung nach einem der Ansprüche 1 bis 7,
**dadurch gekennzeichnet, daß** die Führungsbahn (8; 108) in dem Verriegelungshaken (5; 105) zumindest einen nichtlinearen Bahnabschnitt aufweist.

9. Verriegelungsvorrichtung nach einem der Ansprüche 1 bis 8,
**dadurch gekennzeichnet, daß** die Antriebskrafteinrichtung der Antriebseinrichtung (16) ein Elektromotor (30) ist, der über ein Ritzel ein mit dem Kulissenstein (26) verbundenes Steigungskabel (28) antreibt.

10. Verriegelungsvorrichtung nach einem der Ansprüche 1 bis 9,
**dadurch gekennzeichnet, daß** die Antriebskrafteinrichtung der Antriebseinrichtung ein insbesondere drehbar gelagerter Handgriff ist, der zum Bewegen des Kulissensteins (26) über ein Steigungskabel (28) mit diesem verbunden ist.

11. Verriegelungsvorrichtung nach einem der Ansprüche 1 bis 8,
**dadurch gekennzeichnet, daß** die Antriebseinrichtung jeweils einen schwenkbaren Handgriff (240) für jeden Verriegelungsmechanismus (35; 135) aufweist, der mit dem Zapfen (218) in Antriebsverbindung gekoppelt ist.

12. Verriegelungsvorrichtung nach einem der Ansprüche 1 bis 11,
**dadurch gekennzeichnet, daß** der Verriegelungshaken (5; 105) in dem Verriegelungsmechanismus (35; 135) in symmetrischer Anordnung zwischen zwei Halteplatten (6, 6'; 106, 106') und/oder zwischen zwei Kipphebeln (14, 14'; 114, 114') verschiebbar gelagert ist.

13. Verriegelungsvorrichtung nach einem der Ansprüche 1 bis 12,
**dadurch gekennzeichnet, daß** der zumindest eine Verriegelungshaken (5; 105) in einer im wesentlichen senkrechten Fahrzeugebene bewegbar ist.

## Claims

1. Locking device for locking a folding hood of a vehicle to a wind deflector, which has a locking hook (5; 105) which is mounted such that it can move, can be locked by means of a drive device (16; 240) in a locking arrangement on a mating locking piece and is mounted either on a roof tip (2) of the folding hood (1) or on the wind deflector (3) such that it can move and can be locked on the wind deflector (3) or on the roof tip (2) as a mating locking piece,
the drive device (16; 240) moving an intermediate element and in particular a tilting lever (14; 114), which is coupled to the locking hook (5; 105) and, in order to close and lock the hood (1), displaces the said locking hook (5; 105) in a pivoting sliding movement relative to a stationary guide part (7; 107), which is in a guiding engagement with a guide track (8; 108) of the locking hook (5; 105), and pivots the latter about the guide part (7; 107), and
the intermediate element or the tilting lever (14; 114) having a guide track (17; 117) on which the drive device (18; 118), as it pivots the intermediate element or tilting lever (14; 114), acts with a changing distance from a pivot axis (15; 115) of the intermediate element or tilting lever (14; 114).

2. Locking device according to Claim 1, **characterized in that**
the locking hook (5; 105) is coupled to the drive device (16; 240) via a locking mechanism (35; 135) which has the tilting lever (14; 114) pivotably mounted on the roof tip (2) or the wind deflector (3, 11), which is connected to the locking hook (5; 105) via a coupling element (13) spaced apart from the guide track (8; 108), and
**in that** the locking mechanism (35; 135) moves the locking hook (5; 105) more slowly with an increased drive force in the last movement section before its locking position on the wind deflector (3, 11).

3. Locking device according to Claim 2, **characterized in that**
the coupling element (13) is guided by the tilting lever (14; 114) on a curved track (33; 133), in particular on a circular track section.

4. Locking device according to Claim 3, **characterized in that**
a drive pin (18; 118; 218) of the drive device (16; 240) is coupled to the tilting lever (14; 114) and drives the latter in two opposite directions for the purpose of locking and unlocking, the drive pin (18; 118) being guided past a pivot axis (15) of the tilting lever (14; 114) on a substantially linear movement path (32; 132) which is at a distance from the pivot axis (15), and being accommodated in a guide track (17; 117) of the tilting lever (14; 114) such that it can be displaced in order to compensate for the changing distance from the pivot axis (15) when in drive engagement.

5. Locking device according to Claim 3 or 4, **characterized in that**
the drive pin (18; 118) is moved more slowly towards the locking position of the locking hook (5; 105) by the drive device (16).

6. Locking device according to one of Claims 2 to 5,
**characterized in that**
the drive device (16) contains a drive link (20) which is arranged in the transverse direction on the roof tip (2) or on the wind deflector (3) and which, at its outer end, has a drive pin (18; 118) that engages in the locking mechanism (35; 135) and, at the opposite inner end, is pivotably mounted, so that the drive pin (18; 118) is guided on an approximately rectilinear movement path (32; 132) as the drive link (20) is pivoted, and
has a guide element (27) which is firmly fitted in the transverse direction to the roof tip (2) or to the wind deflector (3) and intersects the drive link (20) at an acute angle, on which element a slotted guide block (26) that can be driven by a drive force unit (30) is mounted such that it can be displaced, engages in a sliding manner in a longitudinal guide (24) of the drive link (20) at the point of intersection and, as a result of its longitudinal displacement on the guide element (27), pivots the drive link (20) with the drive pin (18; 118).

7. Locking device according to Claim 6, **characterized in that**
the slotted guide block (26), which is driven at an approximately constant speed, moves the pin (18; 118) in an accelerated or retarded manner, depending on the direction of movement.

8. Locking device according to one of Claims 1 to 7,
**characterized in that**
the guide track (8; 108) has at least one nonlinear track section in the locking hook (5; 105).

9. Locking device according to one of Claims 1 to 8,
**characterized in that**
the drive force device of the drive device (16) is an electric motor (30) which, via a pinion, drives a raising cable (28) connected to the slotted guide block (26).

10. Locking device according to one of Claims 1 to 9,
**characterized in that**
the driving force device of the drive device is a handle which is in particular rotatably mounted and which, in order to move the slotted guide block (26), is connected to the latter via a raising cable (28).

11. Locking device according to one of Claims 1 to 8,
**characterized in that**
the drive device in each case has a handle (240) which can be pivoted for each locking mechanism (35; 135) and which is coupled to the pin (218) in a drive connection.

12. Locking device according to one of Claims 1 to 11,
**characterized in that**
the locking hook (5; 105) is displaceably mounted in the locking mechanism (35; 135) in a symmetrical arrangement between two retaining plates (6, 6'; 106, 106') and/or between two tilting levers (14, 14'; 114, 114').

13. Locking device according to one of Claims 1 to 12,
**characterized in that**
the at least one locking hook (5; 105) can be moved in a substantially vertical vehicle plane.

## Revendications

1. Dispositif de verrouillage pour verrouiller une capote rabattable de véhicule sur une moulure déflectrice, comportant un crochet de verrouillage (5 ; 105) qui est monté mobile ; peut être verrouillé dans une pièce de verrouillage complémentaire, avec venue en prise de blocage, au moyen d'un système d'entraînement (16 ; 240) ; est monté, avec mobilité, sur la moulure déflectrice (3) ou sur une zone frontale (2) de la capote rabattable (1) ; et est verrouillable sur ladite moulure déflectrice (3) ou sur ladite zone frontale (2), remplissant respectivement la fonction d'une pièce de verrouillage complémentaire,
le système d'entraînement (16 ; 240) imprimant des mouvements à un organe intercalaire, en particulier à un levier basculant (14 ; 114) accouplé au crochet de verrouillage (5 ; 105), en faisant coulisser celui-ci, afin de fermer et de verrouiller la capote (1) dans une position prise par pivotement et coulissement vis-à-vis d'une pièce fixe de guidage (7 ; 107) en prise de guidage avec une piste de guidage (8 ; 108) du crochet de verrouillage (5 ; 105) ; et en le faisant pivoter autour de ladite pièce de guidage (7 ; 107), et
l'organe intercalaire ou le levier basculant (14 ; 114) présentant, respectivement, une piste de guidage (17 ; 117) avec laquelle le système d'entraînement (18 ; 118) vient en prise lors du pivotement respectif dudit organe intercalaire ou dudit levier basculant (14 ; 114), avec variation de la distance par rapport à un axe respectif de pivotement (15 ; 115) dudit organe intercalaire ou dudit levier basculant (14 ; 114).

2. Dispositif de verrouillage selon la revendication 1,
**caractérisé par le fait que** le crochet de verrouillage (5 ; 105) est accouplé au système d'entraînement (16 ; 240) par l'intermédiaire d'un mécanisme de verrouillage (35 ; 135) pourvu du levier basculant (14 ; 114) qui est monté pivotant sur la zone frontale (2) ou sur la moulure déflectrice (3, 11), et est relié audit crochet de verrouillage (5 ; 105) par l'intermédiaire d'un élément d'accouplement (13) distant de la piste de guidage (8 ; 108) ; et **par le fait que** ledit mécanisme de verrouillage (35 ; 135) imprime un mouvement ralenti audit crochet de verrouillage (5 ; 105) sur le dernier trajet de mouvement précédant sa position verrouillée sur ladite moulure déflectrice (3, 11), avec accroissement de la force d'entraînement.

3. Dispositif de verrouillage selon la revendication 2,
**caractérisé par le fait que** l'élément d'accouplement (13) est guidé par le levier basculant (14 ; 114) sur une piste curviligne (33 ; 133), notamment sur un segment de piste circulaire.

4. Dispositif de verrouillage selon la revendication 3,
**caractérisé par le fait qu'**un tenon d'entraînement (18 ; 118 ; 218) du système d'entraînement (16 ; 240) est accouplé au levier basculant (14 ; 114) et entraîne ce dernier dans deux directions opposées, respectivement en vue du verrouillage et du déverrouillage, ledit tenon d'entraînement (18 ; 118) étant guidé sur une piste de mouvement (32 ; 132) sensiblement linéaire et distante d'un axe de pivotement (15) dudit levier basculant (14 ; 114), en passant en regard dudit axe de pivotement (15) ; et est logé à coulissement avec venue en prise d'entraînement, dans une piste de guidage (17 ; 117) dudit levier basculant (14 ; 114), en vue de compenser la distance variant vis-à-vis de l'axe de pivotement (15).

5. Dispositif de verrouillage selon la revendication 3 ou 4,
**caractérisé par le fait que** le tenon d'entraînement (18 ; 118) est animé d'un mouvement ralenti, par le système d'entraînement (16), vers la position verrouillée du crochet de verrouillage (5 ; 105).

6. Dispositif de verrouillage selon l'une des revendications 2 à 5,
**caractérisé par le fait que** le système d'entraînement (16) englobe une biellette d'entraînement (20) qui est agencée transversalement sur la zone frontale (2) ou sur la moulure déflectrice (3), présente, à son extrémité extérieure, un tenon d'entraînement (18 ; 118) pénétrant dans le mécanisme de verrouillage (35 ; 135), et est montée pivotante, par l'extrémité intérieure opposée, de telle sorte que ledit tenon d'entraînement (18 ; 118) soit guidé sur une piste de mouvement (32 ; 132) sensiblement rectiligne, lors du pivotement de ladite biellette d'entraînement (20) ; et
un élément de guidage (27) qui est respectivement monté rigide sur la zone frontale (2) ou sur la moulure déflectrice (3), dans le sens transversal ; coupe la biellette d'entraînement (20) selon un angle aigu ; et sur lequel est monté, à coulissement, un coulisseau (26) qui peut être mené par une unité mécanique motrice (30), qui s'engage par glissement dans un guide longitudinal (24) de la biellette d'entraînement (20), au point d'intersection, et qui, suite à son déplacement longitudinal sur l'élément de guidage (27), fait pivoter ladite biellette d'entraînement (20) avec le tenon d'entraînement (18 ; 118).

7. Dispositif de verrouillage selon la revendication 6,
**caractérisé par le fait que** le coulisseau (26), mené à vitesse sensiblement constante, imprime un mouvement accéléré ou ralenti, au tenon (18 ; 118), en fonction du sens de mouvement.

8. Dispositif de verrouillage selon l'une des revendications 1 à 7,
**caractérisé par le fait que** la piste de guidage (8 ; 108) présente au moins un segment de piste non linéaire dans le crochet de verrouillage (5 ; 105).

9. Dispositif de verrouillage selon l'une des revendications 1 à 8,
**caractérisé par le fait que** le système mécanique moteur du système d'entraînement (16) est un moteur électrique (30) menant, par l'intermédiaire d'un pignon, un câble ascenseur (28) relié au coulisseau (26).

10. Dispositif de verrouillage selon l'une des revendications 1 à 9,
**caractérisé par le fait que** le système mécanique moteur du système d'entraînement est une poignée qui est notamment montée rotative et est reliée à un câble ascenseur (28), en vue d'imprimer des mouvements au coulisseau (26) par l'intermédiaire dudit câble.

11. Dispositif de verrouillage selon l'une des revendications 1 à 8,
**caractérisé par le fait que** le système d'entraînement est pourvu, pour chaque mécanisme de verrouillage (35 ; 135), d'une poignée pivotante respective (240) en liaison d'entraînement avec le tenon (218).

12. Dispositif de verrouillage selon l'une des revendications 1 à 11,
**caractérisé par le fait que** le crochet de verrouillage (5 ; 105) est monté coulissant dans le mécanisme de verrouillage (35 ; 135), avec disposition symétrique entre deux plaques de retenue (6, 6' ; 106, 106') et/ou entre deux leviers basculants (14, 14' ; 114, 114').

13. Dispositif de verrouillage selon l'une des revendications 1 à 12,
**caractérisé par le fait que** le crochet de verrouillage (5 ; 105), prévu au minimum, est mobile dans un plan de véhicule sensiblement vertical.
